# NEW EUROPEAN PATENT SPECIFICATION

(11) **EP 2 099 313 B2**
(45) Date of publication and mention of the opposition decision: **11.09.2019**
(45) Mention of the grant of the patent: 12.03.2014
(21) Application number: 07821771.8
(22) Date of filing: 24.10.2007
(51) Int. Cl.: A23G 9/48, A23G 9/32, A23G 1/30

(54) **COMPOUND COATING WITH REDUCED SATURATED FATTY ACID LEVELS**
VERBUNDBESCHICHTUNG MIT REDUZIERTEM GEHALT AN GESÄTTIGTEN FETTSÄUREN
COMPOSÉ D'ENROBAGE AVEC DES NIVEAUX À TENEUR RÉDUITE EN ACIDES GRAS SATURÉS

(30) Priority: 01.12.2006 US 566051
(43) Date of publication of application: 16.09.2009
(73) Proprietor: Société des Produits Nestlé S.A., 1800 Vevey (CH)
(72) Inventor: NALUR, Shantha Chandrasekaran, Leeds, LS16 5RX (GB)
(74) Representative: Elleby, Gudrun
(86) International application number: PCT/EP2007/061408
(87) International publication number: WO 2008/064962

(56) References cited:
- EP-A- 1 813 155
- WO-A-96/10338
- US-A- 5 731 027
- US-A- 5 891 495
- US-A- 5 939 114
- "LODERS CROKLAAN AND THE ICE CREAM MANUFACTURER" CONFECTIONERY PRODUCTION, SPECIALISED PUBLICATIONS LTD., SURREY, GB, vol. 57, no. 5, 1 May 1991 (1991-05-01), page 338, XP000214442 ISSN: 0010-5473

## Description

### FIELD OF THE INVENTION

The present invention relates to improvements in compound coatings, in particular to provide such coatings with reduced saturated fatty acid (SFA) levels, and the use of such coatings upon ice confections and in the manufacture and production of such products.

### BACKGROUND OF THE INVENTION

There is an increased concern among consumers about the SFA content of the foods they consume and about the negative effects of such foods on their health and general well-being. It has been shown that SFAs increase levels of LDL cholesterol in the blood and is a cause of heart diseases. Thus, there is a need in the industry to provide healthier food having low levels of SFAs.

Traditional compound coatings for ice confections, such as ice cream, have been manufactured with coconut oil which has an SFA level of 91%. Coconut oil is a solid at freezer temperature (-10°F or lower) so that compound coatings are solid and firm. Firmness is desirable for such coatings for both providing "snap" at initial bite and for resisting deformation and surface marking of the chocolate from time of manufacture until to time of consumption. Most importantly, coconut oil has a relatively sharp melting behavior which is unique among all natural fats. Some natural fats melt at higher temperatures, which results in an undesirable "waxy" eating texture in compound coatings. In contrast, natural fats that melt at lower temperatures make compound coatings softer with less "snap" upon biting and also renders such coatings more susceptible towards deformation and surface blemish. The melting behavior of coconut oil is the result of its unique triglyceride composition which as noted is high in SFA.

For various reasons, the prior art has tried to replace coconut oil with other types of edible oils. "Loders Croklaan and the ice cream manufacturer" from Confectionary Production specialized publications (Vol 57, no 5, 1 May 1991, pages 338) discloses wet fractionation technology to create speciality fat replacement for coconut oil. US 5,731,027 describes blends of sugar and triglyceride component for the preparation of low SAFA ice cream coatings. WO 96/10338 discloses the preparation of ice cream coating compositions with a reduced SFA content based on the use of a blend of natural fats. In particular, this document teaches combination of cocoa butter and liquid oil. The coatings there-disclosed are flexible instead of having the above-mentioned "snap".

U.S. Pat. No. 4,594,259 discloses replacing coconut oil with fractionated palm oil while U.S. Pat. No. 5,215,780 recites using sunflower and soybean oils as coconut oil substitutes. U.S. Pat. No. 5,766,659 discloses an ice cream coating composition for inhibiting moisture migration and improving physical strength. U.S. Pat. No. 5,939,114 discloses ice cream coating compositions with reduced waxiness obtained by using the following compositions: S=saturated fatty acid with C₁₆-C₂₄ and U=unsaturated fatty acid C₁₈, while C₁₆:C₁₈ is greater than 2. U.S. Pat. No. 6,818,238 discloses an ice confection having an ice confection core and a fat-based outer coating layer wherein the fat in the coating is predominantly a soft type palm mid fraction. The use of the soft type palm mid fraction having a melting point of around 26°C in a fat-based coating dramatically reduces or prevents bleed through the coating of coated ice cream products, as well as cracking.

Despite these substitutions, none of these prior art references disclose or mention the snappiness of the compound coatings produced thereby. Since the melting behavior of coconut oil is the result of its unique triglyceride composition which is high in SFA, and compound coatings derive their desirable eating qualities predominantly from the melting properties of coconut oil, the replacement of coconut oil with other edible oils would be expected to change the desirable organoleptic qualities of compound coatings.

Thus, there is a need in the industry for producing healthier compound coatings for ice cream wherein the coatings have lower levels of SFA, compared with conventional coatings, while retaining current textural characteristics, such as snappiness. In addition, the coating setting time (or crystallization time) should be sufficiently short to meet industrial production requirement.

### SUMMARY OF THE INVENTION

The present invention now provides compound coatings with reduced SFA while maintaining similar snappiness to that of conventional compound coatings. To accomplish this, the invention provides an ice confection product comprising an ice confection core and an edible low-saturated-fat snappy compound coating having an SFA level from fat and oil additives that is reduced by at least about 25% compared to conventional compound coatings while retaining snap properties that are similar to those of the conventional compound coating. The ice confection product has an SFA level from fat and oil additives of 30% by weight or less, whereas conventional compound coatings have an SFA level from fat and oil additives of about 44 to 50% by weight.

In particular, the compound coating comprises fractionated palm oil, a low SFA liquid oil and optionally, a structuring agent. Preferably, the fractionated palm oil represents 40 to 95%, more preferably 50 to 92% and most preferably 60 to 90 % by weight of the fat in the coating excluding the fat contribution from cocoa powder or cocoa liquor that are generally used as standard components of the coating. Preferably the liquid oil represents 5 to 60%, more preferably 8 to 50% and most preferably 10 to 40% by weight of the fat in the coating other than the fat contribution from cocoa powder or cocoa liquor.

Advantageously, the SFA of the liquid oil is about 30% or less. Typical examples of useful liquid oils include canola, peanut, sunflower, rapeseed, grape-seed, cotton-seed, soybean or corn oils. When the structuring agent is present in the compound coating, it may be selected from the group consisting of monoglyceride, monoglyceride esters, beeswax, behenic acid, palm stearin, or a combination thereof.

Typically, the ice confection core is a molded ice cream or an extruded ice cream having a desired shape, and the product is in the form of a portion, a dome, a bar, a morsel, a bonbon, an ice cream cone or a stick bar. The compound coating may include dark, milk or white chocolate.

The invention also relates to a method for producing ice confection products of the type disclosed herein. This method includes forming an ice confection core, forming the edible low- saturated fat snappy compound coating in a form that is liquid; and applying the coating to at least a portion of the ice confection core by dipping, spraying, or enrobing. When the ice confection core is a molded ice cream or an extruded ice cream having a desired shape, the coating is applied upon substantially all exposed surfaces of the ice confection core.

### DETAILED DESCRIPTION OF THE PREFERRED EMBODIMENTS

Addition of liquid oil to a coating would be expected to make the coating soft. Surprisingly, when a low SFA liquid oil such as canola, peanut, sunflower, rapeseed, grape-seed, cotton-seed, soybean or corn oil, is combined with fractionated palm oil, the resulting fat blend gives the coating a distinctive snap characteristic rather than a flexible or softer coating. At the same time, the presence of a low SFA component can significantly reduce the level of SFA in coated ice cream products without sacrificing the desirable textural characteristics that are similar to those of conventional products. Accordingly, the present invention provides an ice cream confection comprising an ice confection core and an edible snappy outer coating layer comprising fractionated palm oil and a low SFA liquid oil such as canola, peanut, sunflower, rapeseed, grape-seed, cotton-seed, soybean and corn oils. This coating has a reduced level of SFA while keeping the current desirable textural characteristics of the conventional coatings, such as snappiness.

The present invention also provides a method for reducing SFA in compound coatings of the coated ice cream products. This method comprises applying an outer coating to an ice cream confection core, in which the fat of the coating comprises fractionated palm oil and a low SFA liquid oil such as canola, peanut, sunflower, rapeseed, grape-seed, cotton-seed, soybean and corn oils, and is reduced in SFA while maintaining similar snappiness to that of the conventional coatings.

This is an important development in delivering healthier ice confection products which have similar organoleptic properties to conventional products, especially in regard to the coating of the ice confection.

The ice confection may be milk- or fat-based and may be, for instance, yogurt, ice milk or a frozen dessert. However, the invention is particularly suitable when the ice confection is ice cream. The outer coating layer comprises predominantly fractionated palm oil and a low SFA liquid oil such as canola, peanut, sunflower, rapeseed, grape-seed, cotton-seed, soybean and corn oils. It may include any kind of coating with fat as the continuous phase, for example, cocoa butter and dark, milk or white chocolate.

The fractionated palm oil represents 40 to 95%, more preferably 50 to 92% and most preferably 60 to 90 % by weight of the fat in the coating excluding the fat contribution from cocoa powder or cocoa liquor which are standard components of a chocolate compound coating. Preferably the liquid oil represents 5 to 60%, more preferably 8 to 50% and most preferably 10-40% by weight of the fat in the coating other than the fat contribution from cocoa powder or cocoa liquor. The SFA level of the liquid oil is below 30%. Some preferred examples are canola, peanut, sunflower, rapeseed, grape-seed, cotton-seed, soybean or corn oils.

When the liquid oil level is high, e.g., above about 50%, it is preferred that a structuring agent be included in the compound coating. This agent may be selected from the group consisting of monoglyceride (including monoglyceride esters), beeswax, behenic acid, palm stearin, or a combination thereof. This component is present in an amount of between about 0.2% and 3% by weight of the coating.

One important advantage of the coating in the ice confection of the invention is that the overall health and nutritional value of the ice cream product is dramatically improved with no sacrifice of the current desirable textural characteristics of the conventional products. Direct advantages are reduction in SFA level from the traditional 46% to 30% or even less while maintaining the snappiness. This results in a reduction of about 33% in SFA level. The snappiness of the compound coating is evaluated by standard organoleptic tests. The ice cream coating of the present invention provides a hardness/snap texture associated with saturated fats despite the reduced level of SFA.

In addition, upon consumption, the coating of the invention has a clean melting profile: not solid at mouth temperature and comparable to a conventional product as shown in TABLE 1. The solid fat content of the fat in weight % in the control composition and compositions of the invention as measured by pulsed NMR is shown below. This measurement is made without any tempering or temperature preconditioning:

**TABLE 1**

| Fat Blends/Temperature (°C) | **-10** | **-5** | **0** | **5** | **10** | **20** | **30** | **40** |
|---|---|---|---|---|---|---|---|---|
| Coconut Oil/Palm Olein (Control) | 87.8 | 87.8 | 80.9 | 74.2 | 57.2 | 6.5 | 0 | 0 |
| Fractionated Palm Oil/Canola Oil | 76.8 | 76.6 | 72.1 | 67.9 | 62.6 | 56.9 | 0.6 | 0 |
| Fractionated Palm Oil/Sunflower Oil | 73.9 | 73.7 | 68.0 | 63 | 55.2 | 40.8 | 0 | 0 |

Although both fractionated palm oil and liquid oils such as canola, peanut, sunflower, rapeseed, grape-seed, cotton-seed, soybean or corn oils are known and used in ice cream coatings, the specific compositions in the invention to reduce SFA level while keeping snappiness have not been previously known or disclosed.

It is important in the context of the invention that the fat blends are distinct from conventionally used coating fats and have a much higher percentage of unsaturated fatty acid class of triglyceride than the control because of the high contribution of low SFA liquid oils. The fat blends are also distinct from coconut oil in that coconut oil has a much higher content of SFA species.

The coating comprises 40 to 60% by weight fat, preferably above 50% by weight fat, which further comprises 65 to 90% by weight fractionated palm oil, preferably 77% by weight and 10 to 35% by weight any liquid oils such as canola, peanut, sunflower, rapeseed, grape-seed, cotton-seed, soybean or corn oils, preferably 23% by weight of canola oil.

Other components of the coating typically include 20 to 50% by weight sugar, preferably 30 to 40% by weight; up to 30% by weight milk ingredients, preferably 10 to 20% by weight; up to 30% cocoa liquor; lecithin and vanillin to the amounts needed. Optionally the coating further comprises a structural agent selected from the group consisting of monoglyceride, monoglyceride esters, Beewax, Behenic acid and Palm stearin, or a combination thereof, if the liquid oil level gets too high.

Milk, white or dark chocolate will also generally be present.

In the invention, the ice confection may be a portion, dome, bonbon, morsel, bar, stick bar or an ice cream cone. It can be extruded or molded. The formulation of the coating can be tailored for a particular coating application by modifying the amounts of the fractionated palm oil and liquid oil within the above-disclosed ranges by conducting routine testing of such formulations and by evaluating snappiness through organoleptic testings.

For coating, the core to be coated preferably is at a low temperature of about -15°C. to -30°C. or lower. It may come from a molding line or from a freezing tunnel and is preferably pre-cooled.

The coating may conveniently be applied to the ice confection core by dipping, spraying or enrobing. And the coating should be flowable and coatable at the temperature at which it is applied which may be from 25° to 45° C. and more usually from 30° to 40° C. If the temperature is too low, the coating may not flow and if the temperature is too high, e.g., 45° C., the coating may tend to slip off the ice cream without coating it properly and by causing excessive melting of the ice cream core.

### EXAMPLES

The following examples further illustrated the present invention. In these examples, parts and percentages are by weight unless specified otherwise.

In these examples, snappiness is determined by organoleptic evaluations.

### Examples 1-5

Molded ice cream centers that are supported on a stick are made and maintained at -20°C. to -30°C.. The bars weigh between 42-44 g each. These bars are dipped into a coating having the composition showing in TABLE 2 and are maintained at -30°C.. The quantity of coating taken up by bar is 12-15 g. The composition of the coating are set out in Table 2 below.

**TABLE 2**

| Ingredient | % |
|---|---|
| Fat | 54.50 |
| Sugar | 25.408 |
| Cocoa liquor | 11.12 |
| Partially demineralized whey powder | 8.34 |
| Soy lecithin | 0.54 |
| Vanillin | 0.022 |

Example 1: Fat = 77% fractionated palm oil + 23% canola oil
Example 2: Fat = 65% fractionated palm oil + 35% canola oil
Example 3: Fat = 90% fractionated palm oil + 10% canola oil
Example 4: Fat = 70% fractionated palm oil + 20% canola oil + 10% coconut oil
Example 5: Fat = 73.2% fractionated palm oil + 21.8% canola oil + 5% coconut oil
   Control: Fat = 69.5% coconut oil + 30.5% palm olein

The SFA level and the snappiness test results are shown in TABLE 3.

**TABLE 3**

| | Example 1 | Example 2 | Example 3 | Example 4 | Example 5 | Control |
|---|---|---|---|---|---|---|
| SFA level | 30% | 30% | 30% | 30% | 30% | 46% |
| Snap rating | 1 | 1 | 1 | 1 | 1 | 1 |

| | | | | | | |
|---|---|---|---|---|---|---|
| Snap rating: 1= most snappy; 5= least snappy | | | | | | |

The snappiness for the coating compositions in Examples 1-5 are the same as that of the control coating using about 69.5% coconut oil and about 30.5% palm olein. These ratings were provided by organoleptic evaluations conducted during blind testing by a skilled artisan (or a test panel).

The solid fat content of the fat in weight % of Example 1 as measured by pulsed NMR at the temperature is shown below. This measurement is made without any tempering or temperature preconditioning:

| °C. | wt % |
|---|---|
| -10 | 76.8 |
| -5 | 76.6 |
| 0 | 72.1 |
| 5 | 67.9 |
| 10 | 62.6 |
| 20 | 56.9 |
| 30 | 0.6 |
| 40 | 0 |

## Claims

1. An ice confection product comprising an ice confection core and an edible compound coating comprising fractionated palm oil and a liquid oil which has an SFA level from fat and oil additives of 30% or less by weight, whereas conventional chocolate compound coatings have an SFA level from fat and oil additives of about 44 to 50% by weight, wherein the fractionated palm oil and liquid oil are present in relative amounts sufficient to impart to the coating snap properties that are similar to those of the conventional chocolate compound coating.

2. The ice confection product of claim 1, in the form of a portion, a dome, a bar, a morsel, a bonbon, an ice cream cone or a stick bar.

3. The ice confection product of claim 1 wherein the compound coating includes dark, milk or white chocolate.

4. The ice confection product of claim 1, wherein the compound coating is fat-based and contains the fractionated palm oil is an amount of about 40 to 95% by weight of the fat in the coating, with the liquid oil being present in an amount of about 5 to 60% by weight of the fat in the coating.

5. The ice confection product of claim 4, wherein the liquid oil is canola, peanut, sunflower, rapeseed, grape-seed, cotton-seed, soybean or corn oil.

6. The ice confection product of claim 4, wherein the liquid oil content is greater than 50% and the product further comprises a structuring agent in an amount sufficient to provide strength to the coating.

7. The ice confection product of claim 6, wherein the structuring agent is a monoglyceride, monoglyceride ester, beeswax, behenic acid, palm stearin, or a combination thereof.

8. The ice confection product of claim 6, wherein the structuring agent is present in an amount of between about 0.2% and 3% by weight of the coating.

9. The ice confection product of claim 4, wherein the fractionated palm oil is present in an amount of 60 to 90% by weight of the fat in the coating, and the liquid oil is canola oil and is present in an amount of 10 to 40% of the fat in the coating.

10. The ice confection product of claim 9, wherein the compound coating has a solid fat content in weight % as measured by pulsed NMR, with the measurement made without any tempering or temperature preconditioning at the temperature indicated, of:
| °C. | wt % |
|---|---|
| -10 | 76.8 |
| -5 | 76.6 |
| 0 | 72.1 |
| 5 | 67.9 |
| 10 | 62.6 |
| 20 | 56.9 |
| 30 | 0.6 |
| 40 | 0 |

11. A method for producing the ice confection product of claim 1 which comprises forming an ice confection core, forming the edible low saturated fat snappy compound coating in a form that is liquid; and applying the coating to at least a portion of the ice confection core by dipping, spraying, or enrobing.

## Patentansprüche

1. Eiskonfektprodukt mit einem Eiskonfektkern und einer essbaren Überzugsmasse, die fraktioniertes Palmöl und ein flüssiges Öl enthält, das einen Gehalt an gesättigten Fettsäuren (SFA = saturated fatty acids) aus Fett- und Ölzusätzen von höchstens 30 Gew-% oder weniger aufweist, während herkömmliche Überzugsmassen aus Schokolade einen SFA-Gehalt aus Fett- und Ölzusätzen von ca. 44 bis 50 Gew-% aufweisen, wobei das fraktionierte Palmöl und das flüssige Öl in relativen Mengen vorliegen, die ausreichend sind, um dem Überzug Bisseigenschaften zu verleihen, die denen der herkömmlichen Überzugsmasse aus Schokolade gleichen.

2. Eiskonfektprodukt gemäß Anspruch 1, in Form einer Portion, einer Kuppel, eines Riegels, eines Happens, eines Bonbons, einer Eistüte oder eines Riegels am Stiel.

3. Eiskonfektprodukt gemäß Anspruch 1, wobei die Überzugsmasse dunkle Schokolade, Milchschokolade oder weiße Schokolade enthält.

4. Eiskonfektprodukt gemäß Anspruch 1, wobei die Überzugsmasse auf Fett basiert und das fraktionierte Palmöl in einer Menge von ca. 40 bis 95 Gew-% des Fetts in dem Überzug enthält, wobei das flüssige Öl in einer Menge von ca. 5 bis 60 Gew-% des Fetts in dem Überzug vorliegt.

5. Eiskonfektprodukt gemäß Anspruch 4, wobei das flüssige Öl aus Raps-, Erdnuss-, Sonnenblumen-, Rüb-, Traubenkern-, Baumwollsamen-, Soja- oder Maiskeimöl besteht.

6. Eiskonfektprodukt gemäß Anspruch 4, wobei der flüssige Ölgehalt höher als 50% ist und das Produkt weiterhin ein Aufbaumittel in einer ausreichenden Menge aufweist, um dem Überzug Festigkeit zu verleihen.

7. Eiskonfektprodukt gemäß Anspruch 6, wobei das Aufbaumittel aus einem Monoglycerid, Monoglyceridester, Bienenwachs, Behensäure, Palmstearin oder einer Kombination aus diesen besteht.

8. Eiskonfektprodukt gemäß Anspruch 6, wobei das Aufbaumittel in einer Menge von ca. 0,2% bis 3 Gew-% des Überzugs vorliegt.

9. Eiskonfektprodukt gemäß Anspruch 4, wobei das fraktionierte Palmöl in einer Menge von 60 bis 90 Gew-% des Fetts in dem Überzug vorliegt und das flüssige Öl aus Rapsöl besteht und in einer Menge von 10 bis 40% des Fetts in dem Überzug vorliegt.

10. Eiskonfektprodukt gemäß Anspruch 9, wobei die Überzugsmasse einen mit gepulster Kernspinresonanz gemessenen, festen Fettgehalt in Gew-% aufweist, wobei die Messung ohne Tempern oder Temperatur-Vorbehandlung bei der angegebenen Temperatur ausgeführt wurde, von:
| °C | Gew-% |
|---|---|
| -10 | 76,8 |
| -5 | 76,6 |
| 0 | 72,1 |
| 5 | 67,9 |
| 10 | 62,6 |
| 20 | 56,9 |
| 30 | 0,6 |
| 40 | 0 |

11. Verfahren zur Herstellung des Eiskonfektprodukts aus Anspruch 1, das das Ausbilden eines Eiskonfektkerns, das Ausbilden der essbaren, knackigen Überzugsmasse mit wenig gesättigtem Fett in einer Form, die flüssig ist, sowie das Aufbringen des Überzugs auf mindestens einen Teil des Eiskonfektkerns durch Eintauchen, Aufsprühen oder Überziehen umfasst.

## Revendications

1. Produit de confiserie glacée comprenant un noyau de confiserie glacée et un revêtement de composé comestible comprenant de l'huile de palme fractionnée et une huile liquide qui présente un taux d'acide gras saturé (SFA) d'additifs de matière grasse et d'huile de 30% en poids ou moins, tandis que les revêtements de composé de chocolat conventionnels présentent un taux SFA d'additifs de matière grasse et d'huile d'environ 44 à 50% en poids, dans lequel l'huile de palme fractionnée et l'huile liquide sont présentes en des quantités relatives suffisantes pour conférer au revêtement des propriétés de craquement qui sont similaires à celles du revêtement de composé de chocolat conventionnel.

2. Produit de confiserie glacée selon la revendication 1, de la forme d'une portion, d'un dôme, d'une barre, d'une bouchée, d'un bonbon, d'un cône de crème glacée ou d'une barre sur bâtonnet.

3. Produit de confiserie glacée selon la revendication 1, dans lequel le revêtement de composé comprend du chocolat noir, au lait ou blanc.

4. Produit de confiserie glacée selon la revendication 1, dans lequel le revêtement de composé est à base de matière grasse et contient l'huile de palme fractionnée en une quantité d'environ 40 à 95% en poids de la matière grasse dans le revêtement, l'huile liquide étant présente en une quantité d'environ 5 à 60% en poids de la matière grasse dans le revêtement.

5. Produit de confiserie glacée selon la revendication 4, dans lequel l'huile liquide est de l'huile de canola, d'arachides, de tournesol, de colza, de pépins de raisin, de coton, de soja ou de maïs.

6. Produit de confiserie glacée selon la revendication 4, dans lequel la teneur en huile liquide est supérieure à 50% et le produit comprend en outre un agent de structuration en une quantité suffisante pour fournir de la fermeté au revêtement.

7. Produit de confiserie glacée selon la revendication 6, dans lequel l'agent de structuration est un monoglycéride, ester de monoglycéride, cire d'abeilles, acide béhénique, stéarine de palme, ou une combinaison de ceux-ci.

8. Produit de confiserie glacée selon la revendication 6, dans lequel l'agent de structuration est présent en une quantité comprise entre environ 0,2% et 3% en poids du revêtement.

9. Produit de confiserie glacée selon la revendication 4, dans lequel l'huile de palme fractionnée est présente en une quantité de 60 à 90% en poids de la matière grasse dans le revêtement, et l'huile liquide est de l'huile de canola et est présente en une quantité de 10 à 40% de la matière grasse dans le revêtement.

10. Produit de confiserie glacée selon la revendication 9, dans lequel le revêtement de composé présente une teneur en matière grasse solide en pourcentage de poids tel que mesuré par RMN puisée, la mesure étant effectuée sans tempérage ou préconditionnement de température à la température indiquée, de :
| °C | % en poids |
|---|---|
| -10 | 76,8 |
| -5 | 76,6 |
| 0 | 72,1 |
| 5 | 67,9 |
| 10 | 62,6 |
| 20 | 56,9 |
| 30 | 0,6 |
| 40 | 0 |

11. Procédé de production d'un produit de confiserie glacée selon la revendication 1, qui comprend la formation d'un noyau de confiserie glacée, la formation d'un revêtement de composé craquant à faible teneur en matière grasse saturée, comestible, sous une forme qui est liquide ; et l'application du revêtement en au moins une partie du noyau de confiserie glacée par immersion, pulvérisation ou revêtement.
